Europäisches Patentamt

European Patent Office

Office européen des brevets

(19)

(11) Numéro de publication: **0 174 670**
**B1**

(12) **FASCICULE DE BREVET EUROPÉEN**

(45) Date de publication du fascicule du brevet:
**18.05.88**

(51) Int. Cl.⁴: **F 24 D 3/14**

(21) Numéro de dépôt: **85113787.7**

(22) Date de dépôt: **06.10.83**

(54) **Agrafe-support destinée à être utilisée dans une installation de chauffage.**

(30) Priorité: **22.10.82 FR 8217709**
**22.10.82 FR 8217710**
**22.10.82 FR 8217711**

(43) Date de publication de la demande:
**19.03.86 Bulletin 86/12**

(45) Mention de la délivrance du brevet:
**18.05.88 Bulletin 88/20**

(84) Etats contractants désignés:
**AT BE CH DE GB LI LU NL**

(56) Documents cité:
**EP-A-0 044 985**
**CH-A-595 596**
**DE-A-3 015 534**
**DE-A-3 028 102**
**FR-A-1 548 501**
**FR-A-2 134 386**

(73) Titulaire: **REHAU AG + Co, Rheniumhaus, D-8673 Rehau (DE)**

(72) Inventeur: **Elles, Yves Michel Robert, 18 Chemin du Moulin, F-57320 Bouzonville (FR)**

(74) Mandataire: **Bourgognon, Jean- Marie, Cabinet Flechner 22, Avenue de Friedland, F-75008 Paris (FR)**

EP 0 174 670 B1

## Description

La présente invention concerne des agrafes-supports destinées à être utilisées dans des installations de chauffage des bâtiments.

Une installation de chauffage de bâtiments par le sol dite "à pose humide" comprend généralement de bas en haut une dalle, une isolation thermique et phonique, une pellicule protectrice, un treillis métallique muni d'agrafes-supports destiné à retenir un circuit tubulaire pour du fluide caloporteur, une chape flottante et un revêtement.

Par le DE-A-3 028 102, et conformément au préambule de la revendication 1, on connaît une agrafe-support qui comprend une embase à gorge de réception d'un tronçon de treillis, surmontée d'une partie d'agrafage destinée à retenir le tube et s'étendant sensiblement suivant un plan qui est parallèle à la direction longitudinale de la gorge.

L'embase est surmontée d'une partie d'agrafage élastique, qui est destinée à retenir le tube et qui peut affecter des formes très diverses, notamment d'arceaux avec ou sans verrouillage. La partie d'agrafage s'étend sensiblement suivant un plan qui est perpendiculaire à la direction longitudinale de la gorge, donc perpendiculairement à l'axe du tronçon de treillis avec lequel l'agrafe-support coopère.

On peut placer autant d'agrafes-supports que l'on veut sur le tronçon de treillis pour agrafer un même tube s'étendant parallèlement à ce tronçon. On ne peut pas en placer entre deux tronçons de treillis parallèles et on ne peut donc pas placer des tubes parallèlement les uns aux autres à une distance inférieure au côté de la maille du treillis, c'est-à-dire la distance séparant deux tronçons de treillis parallèles. Il faut tenir en magasin des treillis de mailles différentes suivant les besoins.

L'invention pallie cet inconvénient par une agrafe-support dont la partie d'agrafage s'étend sensiblement suivant un plan qui est parallèle à la direction longitudinale de la gorge. Deux pattes opposées s'étendent parallèlement à cette direction, l'une ayant à son extrémité un élément mâle, l'autre un élément femelle conjugué de l'élément mâle.

Le tube s'étend donc perpendiculairement au tronçon de treillis auquel il est retenu par son agrafage. On peut donc disposer autant de tubes que l'on veut parallèlement les uns aux autres perpendiculairement à ce tronçon, même à un intervalle inférieur au côté de la maille du treillis, les agrafes-supports coopérant les unes avec les autres par leurs éléments mâle et femelle en sorte que les agrafes-supports intermédiaires se trouvant hors des points de croisement du treillis sont maintenues et empêchées de basculer par celles qui se trouvent aux points de croisement et dont l'embase peut s'appuyer sur le tronçon de treillis perpendiculaire à celui sur lequel elles sont placées. On est sûr ainsi que les tubes restent dans un même plan et qu'il ne se crée pas de points hauts d'accumulation d'air très préjudiciables au bon fonctionnement de l'installation de chauffage.

De préférence, l'embase comprend deux éléments creux opposés, s'étendant perpendiculairement à la gorge et dans le même plan que celle-ci, d'application de l'agrafe-support à un tronçon de treillis perpendiculaire à celui qui passe dans la gorge.

L'invention vise également, selon la revendication 4, une installation de chauffage par le sol comprenant des tubes parallèles fixés à un treillis par des agrafes-supports suivant l'invention placées sur un tronçon de treillis perpendiculaire à la direction des tubes.

Les revendications dépendantes des revendications 1 et 4 concernent des mods préférentiels de réalisation de l'invention.

Au dessin annexé, donné uniquement à titre d'exemple:

La figure 1 est une vue en élévation d'une agrafe-support suivant l'invention;

La figure 2 en est une vue de côté; et

La figure 3 est un schéma d'une variante d'installation de chauffage par le sol suivant l'invention, avant qu'elle ne soit recouverte d'une chape.

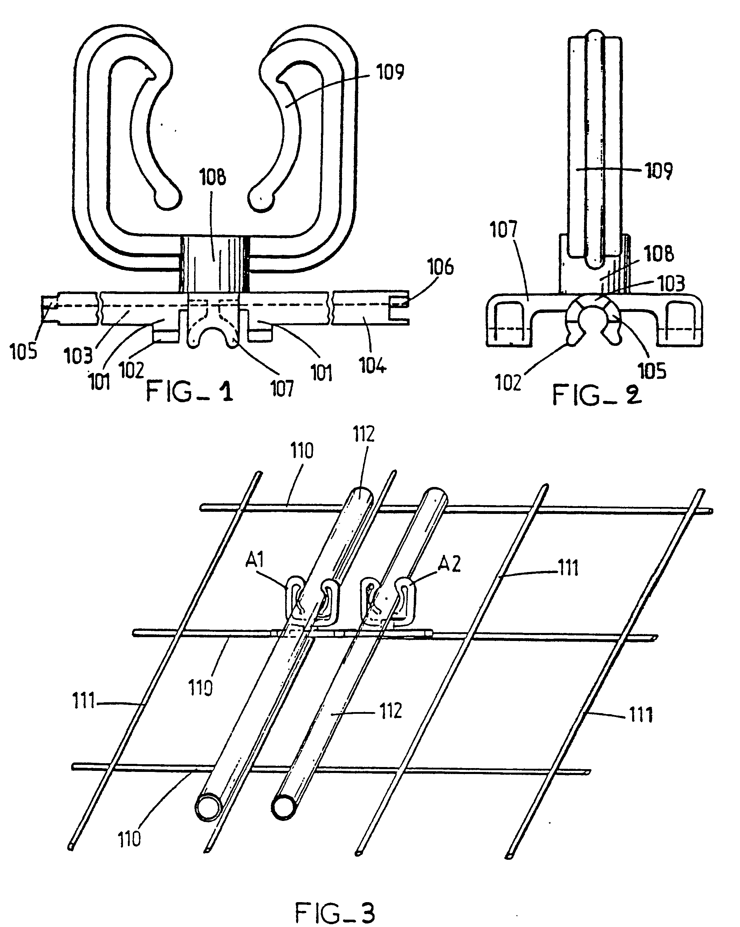

L'agrafe-support de la figure 1 comprend une embase 101 dans la partie inférieure de laquelle est ménagée une gorge 102, ouverte vers le bas, de réception d'un tronçon de treillis. De l'embase 101 partent parallèlement à l'axe de la gorge, deux pattes 103, 104. La patte 103 se termine par deux tenons 105 mâles. La patte 104 se termine par deux mortaises 106 femelles conjuguées de tenons. De l'embase 101 partent, perpendiculairement à l'axe de la gorge, deux éléments 107 creux opposés, ouverts vers le bas, destinés à s'appliquer sur le tronçon de treillis qui croise celui qui est engagé dans la gorge 102.

De la face supérieure de l'embase 1 est issu un support 108 pour une partie d'agrafage constituée de deux arceaux 109 élastiques s'étendant suivant un plan qui est parallèle à la direction longitudinale de la gorge 102. La partie d'agrafage est donc à même d'enserrer un tube s'étendant perpendiculairement à la gorge 102.

A la figure 3, l'installation de chauffage comprend un treillis métallique, qui est posé sur une dalle avec interposition d'isolations non représentées et qui est constitué de tronçons 110 parallèles et de tronçons 111 qui sont perpendiculaires aux tronçons 110.

Une agrafe-support A₁ estplacée sur un point de croisement d'un tronçon 110 et d'un tronçon 111, la gorge 102 recevant un tronçon 110. Le tronçon 111 vient dans les éléments 107. L'agrafe-support A₁ est ainsi bien maintenue par les deux tronçons 110 et 111 du point de croisement et ne peut pas basculer. Un premier tube 112 de chauffage, parallèle au tronçon 111, est enserré par les arceaux 109 de l'agrafe-support A₁.

Les tenons 105 de l'agrafe-support A₁ s'engagent dans les mortaises 106 d'une agrafe-

support $A_2$ montée par sa gorge 102 sur le même tronçon 110 que l'agrafe-support $A_1$. L'agrafe-support $A_2$ enserre un autre tube 112 parallèle au premier. La distance entre les gorges 102 des agrafes-supports $A_1$ et $A_2$ est inférieure à celle séparant deux tronçons 111 successifs. L'agrafe-support $A_2$, qui ne peut pas s'appuyer par ses éléments 107 sur un tronçon 111, ne bascule pas cependant, car la liaison par tenon et mortaise avec l'agrafe-support $A_1$ l'en empêche. On peut donc agrafer des tubes 112 d'une manière fiable pour le chauffage, en les disposant à un intervalle inférieur à la maille du treillis.

## Revendications

1. Agrafe-support d'agrafage d'un tube à un treillis, comprenant une embase (101), à gorge (102) de réception d'un tronçon de treillis, surmontée d'une partie d'agrafage (109) destinée à retenir le tube et s'étendant sensiblement suivant un plan qui est parallèle à la direction longitudinale de la gorge (102), caractérisée en ce qu'il est prévu deux pattes (103, 104) opposées s'étendant parallèlement à la direction longitudinale de la gorge (102), dont les extrémités présentent l'un élément mâle (105) et l'autre un élément femelle (106) conjugué de l'élément mâle (105).

2. Agrafe-support suivant la revendication 1, caractérisée en ce que les pattes (103, 104) sont issues de l'embase (101).

3. Agrafe-support suivant la revendication 1 ou 2, caractérisée en ce que l'embase (101) comprend deux éléments (107) opposés, s'étendant perpendiculairement à la gorge (102) et dans le même plan que celle-ci, d'application de l'agrafe-support à un tronçon de treillis perpendiculaire à celui qui passe dans la gorge (102).

4. Installation de chauffage par le sol comprenant des tubes (112 ) parallèles fixés à un treillis par des agrafes-supports, caractérisée en ce que les agrafes-supports sont tels que définies à l'une des revendications 1 à 3 et sont placées sur un tronçon (110) de treillis perpendiculaire à la direction des tubes (112) au moyen des gorges (102) et que les extrémités mâle et femelle des pattes (103, 104) en regard sont emboîtées.

5. Installation suivant la revendication 4, caractérisée en ce que les agrafes-supports sont à une distance mutuelle inférieure intervalle entre deux tronçons (111) successifs du treillis perpendiculaires au tronçon (110).

## Patentansprüche

1. Rohrschelle zum Festklemmen eines Rohres auf einem Gitterwerk, umfassend eine Fußfläche (101) mit einer Hohlkehle (102) zur Aufnahme eines Gitterwerkteilstücks, die von einem Klammerteil zum Festhalten des Rohres überragt wird, das sich im wesentlichen in einer Ebene erstreckt, die parallel zur Längsrichtung der Hohlkehle (102) verläuft, dadurch gekennzeichnet, daß zwei entgegengesetzt angeordnete Schienen (103, 104) vorgesehen sind, die sich parallel zur Längsrichtung der Hohlkehle (102) erstrecken und deren Enden ein matrizenförmiges Element (105) und das andere ein matrizenförmiges Element (106) aufweisen, das mit dem matrizenförmigen Element (105) gekoppelt wird.

2. Rohrschelle nach Anspruch 1, dadurch gekennzeichnet, daß die Schienen (103, 104) aus der Fußfläche (101) hervorgehen.

3. Rohrschelle nach Anspruch 1 oder 2, dadurch gekennzeichnet, daß die Fußfläche (101) zwei gegenüberliegende/entgegengesetzte Elemente (107) umfaßt, die sich senkrecht zur Hohlkehle (102) und in der gleichen Fläche/Ebene wie diese erstrecken, zur Befestigung der Rohrschelle auf einem Gitterwerkteilstück, das senkrecht zu dem Teilstück verläuft, das in die Hohlkehle (102) eingreift.

4. Fußbodenheizung, umfassend parallele Rohre (112), die auf einem Gitterwerk durch Rohrschellen befestigt sind, dadurch gekennzeichnet, daß die Rohrschellen, wie in einem der Ansprüche 1 bis 3 definiert, ausgebildet und auf einem Gitterwerkteilstück (110) senkrecht zur Richtung der Rohre (112) mittels Hohlkehlen (102) angeordnet sind und daß die sich gegenüberliegenden matrizenförmigen und matrizenförmigen Enden der Schienen (103, 104) ineinandergesteckt werden.

5. Anlage nach Anspruch 4, dadurch gekennzeichnet, daß die Rohrschellen sich in einem geringeren Abstand befinden als die Entfernung zwischen zwei aufeinander folgenden Teilstücken (111) des Gitterwerks, die senkrecht zum Teilstück (110) verlaufen.

## Claims

1. Support clip for clipping a tube to a grid, comprising a base (101), having a groove (102) for receiving a length of grid, surmounted by a fixing portion (109) intended to hold the tube and extending substantially in a plane which is parallel to the longitudinal direction of the groove (102), characterised in that two opposite lugs (103, 104) are provided, extending parallel to the longitudinal direction of the groove (102) one end having a male element (105) whilst the other end has a female element (106) which fits the male element (105).

2. Support clip as claimed in claim 1, characterised in that the lugs (103, 104) project from the base (101).

3. Support clip as claimed in claim 1 or 2, characterised in that the base (101) comprises two opposite elements (107) extending perpendicularly to the groove (102) and in the same plane as the latter, for applying the support clip to a length of grid perpendicular to that which fits in the groove (102).

4. Under-floor heating installation comprising parallel tubes (112) fixed to a grid by support clips, characterised in that the support clips are as defined in one of claims 1 to 3 and are arranged on a length (110) of grid perpendicular to the direction of the tubes (112) by means of grooves (102) and the male and female ends of the facing lugs (103, 104) are fitted together.

5. Installation as claimed in claim 4, characterised in that the support clips are at a spacing from one another less than the gap between two successive lengths (111) of the grid perpendicular to the length (110).

FIG_1

FIG_2

FIG_3